# EUROPÄISCHE PATENTSCHRIFT

(11) **EP 1 123 014 B1**
(45) Veröffentlichungstag und Bekanntmachung des Hinweises auf die Patenterteilung: **09.06.2004**
(21) Anmeldenummer: 99953828.3
(22) Anmeldetag: 14.10.1999
(51) Int. Cl.: A23L 1/317, A23L 1/025, A22C 11/00

(54) **VERFAHREN ZUM VERFESTIGEN DER OBERFLÄCHE VON ROHBRÄT DURCH ULTRASCHALLBEHANDLUNG**
METHOD FOR HARDENING THE SURFACE OF SAUSAGE MEAT USING ULTRASONIC TREATMENT
PROCEDE POUR RIGIDIFIER LA SURFACE D'UNE MASSE DE CHAIR A SAUCISSE BRUTE PAR TRAITEMENT PAR ULTRASONS

(30) Priorität: 19.10.1998 DE 19849357
(43) Veröffentlichungstag der Anmeldung: 16.08.2001
(73) Patentinhaber: Kortschack, Fritz, 14089 Berlin (DE)
(72) Erfinder: KORTSCHACK, Fritz, D-14089 Berlin (DE); HEINZ, Volker, D-13595 Berlin (DE)
(74) Vertreter: Kruspig, Volkmar, Dipl.-Ing.
(86) Internationale Anmeldenummer: PCT/EP1999/007750
(87) Internationale Veröffentlichungsnummer: WO 2000/022943

(56) Entgegenhaltungen:
- WO-A-92/18011
- WO-A-96/35340
- DE-A- 2 950 384
- DE-A- 3 912 071
- US-A- 4 997 663
- PATENT ABSTRACTS OF JAPAN vol. 010, no. 036 (C-328) & JP 60 188046 A (BIBUN CORP)
- DATABASE FSTA [Online] INTERNATIONAL FOOD INFORMATION SERVICE (IFIS), FRANFURT/MAIN, DE XP002127149 & REYNOLDS, J.B. ET AL.: "Effect of ultrasonic treatment on binding strength in cured ham rolls." JOURNAL OF FOOD SCIENCE., Bd. 43, Nr. 3, 1978, Seiten 866-869, XX, XX

## Beschreibung

Die Erfindung betrifft ein Verfahren zum Verfestigen der Oberfläche von Rohbrät durch Ultraschallbehandlung.

Bisher werden Bräte in Wursthüllen gefüllt, anschließend zur Stabilisierung erhitzt, eventuell gleichzeitig geräuchert oder direkt in ein heißes Wasserbad verbracht.
Die derart behandelten Rohprodukte weisen einen nicht unerheblichen Produktionsverlust unter anderem an Eiweiß, Geschmacksstoffen und Fett auf. Die nach dem Erhitzungsvorgang erforderlichen weiteren Verpackungsmanipulationen begünstigen eine Rekontamination der Halbfertigwaren. Zur Haltbarkeitsverlängerung müssen die Produkte häufig,in den Transport- oder Endverbraucherpackungen zusätzlich pasteurisiert werden.

Aus der DD-Patentschrift 2009 701 ist ein Verfahren zum Füllen von Formkästen für darmlose Wurst bekannt, wobei es dort darum geht, beim Einfüllen bzw. beim Füllen der Kartuschen Lufteinschlüsse im Brühwurstbrät zu vermeiden. Das Brät wird gemäß der bekannten Lehre in die Kartusche durch Rüttelbewegungen verbracht, wobei Schwingungen im Ultraschallbereich als bevorzugt dargestellt werden.

Aus der amerikanischen Patentschrift US 4 997 663 ist ein Verfahren zum Verfestigen von Rohwurst bekannt, wobei eine Schutzschicht koagulierten Eiweißmaterials durch z.B. kurze Erhitzung mittels Mikrowellenenergie ausgebildet wird.

Die deutsche Offenlegungsschrift DE 29 50 384 A1 offenbart ein Verfahren und eine Vorrichtung zum Behandeln von Lebensmitteln mit ultraschallfrequenter Energie. Im einzelnen ist dort ausgeführt, daß der Garungsprozeß von Kochgut auf dem Zerschlagen der Faserstruktur und dem Aufschließen der Enzyme des Garguts und damit verbunden auf einem mechanischen Garungsvorgang, der auf der Reibungswärme im Gargut beruht, zurückzuführen ist. Weiterhin wird erläutert, daß die Einwirkung von Ultraschallenergie das Gargut im Sinne einer Koagulation verändert. Grundsätzlich wird jedoch bei der DE 29 50 384 A1 davon ausgegangen, daß das Gargut zusätzlich zur Behandlung mit rein thermischer Energie durch Ultraschall zu beaufschlagen ist, um den Garungsprozeß zu optimieren. Garung heißt dabei, daß das gesamte Gargut über das gesamte Volumen dem entsprechenden Prozeß zu unterwerfen ist. Irgendwelche Anregungen, eine Eigenhaut zur Stabilisierung der Form von Einzelrohlingen durch Einwirkung von Ultraschallenergie auszubilden, insbesondere um die Zwischenstabilität eines Halbfertigprodukts zu erhöhen, sind der DE 29 50 384 A1 nicht zu entnehmen.

Aus dem Vorgenannten ist es Aufgabe der Erfindung, ein Verfahren zum Verfestigen der Oberfläche von Rohbrät, z.B. rohes Brühwurst-, rohes Kochwurst- oder rohes Rohwurstbrät, durch Ultraschallbehandlung anzugeben, wobei die Behandlung eine Stabilisierung der Form der Einzelrohlinge zur Folge haben soll und gleichzeitig zu vermeiden ist, daß das Rohprodukt an Bearbeitungsmitteln in unerwünschter Weise haftet.

Mit dem Verfahren soll eine natürliche stabilisierende und quasi Schutzschicht auf der Oberfläche des Bräts ausgebildet werden, so daß bei z.B. Rohwürsten auf einen Darm verzichtet werden kann und auch eine nachträgliche Produktreifung möglich ist. Gleichfalls soll das Verfahren das erwähnte Vorausstabilisieren für solche Produkte gewährleisten, die einer späteren Wärme- oder Hochdruckbehandlung unterzogen werden.

Die Lösung der Aufgabe der Erfindung erfolgt mit einem Verfahren gemäß Definition nach Patentanspruch 1, wobei die Unteransprüche mindestens zweckmäßige Ausgestaltungen und Weiterbildungen darstellen.

Erfindungsgemäß wird das in üblicher Weise erstellte Rohbrät zunächst einer Entgasungsbehandlung, beispielsweise durch Evakuieren unterzogen. Im Anschluß daran erfolgt ein unmittelbares Inkontaktbringen des Rohprodukts mit der Oberfläche einer oder mehrerer Ultraschallsonotroden, wobei mindestens eine der Ultraschallsonotroden beheizt ist, d.h. eine Eigentemperatur aufweist, die größer als diejenige ist, die durch prozeßbedingte Wärmeentwicklung entsteht.

Bevorzugt werden im Sinne einer kontinuierlichen Behandlung rohrförmige Hohlsonotroden eingesetzt, wobei allerdings auch die Verwendung von bezogen auf das Produkt formgebenden Sonotroden denkbar ist. Die Behandlungsoberfläche der Sonotroden kann eine haftungsminimierende Mikrostruktur aufweisen.

Die Ultraschallenergie, welche auf das Rohprodukt aufgebracht wird, weist eine niedrige Frequenz, jedoch eine hohe Schwingungsamplitude auf, wobei bevorzugt im Frequenzbereich zwischen 16 und 50 kHz bei einer Amplitude der Ultraschallschwingungen im Bereich von im wesentlichen 5 bis 50 µm gearbeitet wird.

Die mit Ultraschallenergie beaufschlagten Moleküle des Rohprodukts geraten bei der Behandlung in Eigenschwingungen, wodurch Reibungswärme entsteht. Hierdurch koaguliert das Eiweiß an der Produktoberfläche und es bildet sich die gewünschte durchgehende Eigenhaut aus. Durch die Kombinationsbehandlung mittels Einsatz einer beheizten Ultraschallsonotrode kann der gewünschte Effekt in optimaler Weise erreicht werden, ohne daß wie ansonsten üblich sehr hohe Ultraschallleistungen im kW-Bereich notwendig sind.
Die Eindringtiefe der Ultraschallwellen in das Behandlungsgut, das ein Gemisch aus Eiweiß, Fett, Wasser, Salzen und Gewürzen darstellt, ist gering, so daß ein unerwünschtes Durchgaren ausgeschlossen ist.

Im Ergebnis der Behandlung setzt an der Oberfläche von Brät bei der Durchströmung eines in Ultraschallschwinungen versetzten Rohres, das als Sonotrode dient, eine Proteindenaturierung ein, wobei die Gleichmäßigkeit der stabilisierenden Eigenhautbildung durch weitgehend lufteinschlußfreies Brät und durch die Erwärmung der Sonotroden über die im Betrieb einsetzende Selbstaufheizung hinaus verbessert wird.

Am Sonotrodeneingang kann auf die Brätoberfläche zur Geschmacks- oder Farbbeeinflussung mitels einer z.B. ringförmigen Düse Flüssigkeit aufgebracht werden. Der Ultraschall bewirkt eine feine und gleichmäßige Verteilung der Flüssigkeit auf der koagulierenden Randschicht. Dadurch kann eine spätere Geschmacksgebung (z.B. durch Rauch) oder färbende Nachbehandlung entfallen oder in ihrer Wirkung optimiert werden.

Es ist jedoch auch möglich, daß am Sonotrodenausgang der derart verfestigte Brätstrom gekühlt und verpackt wird oder auch einer weiteren Bearbeitung oder Behandlung, z.B. durch Flüssigrauch oder dergleichen Geschmacks- oder Dekorstoffe unterzogen wird.

In einer Ausgestaltung kann das Brät auch in trennbare Formen gefüllt werden, die durch angekoppelte Sonotroden in mechanische Schwingungen versetzt werden.

Nach der in vorstehender Weise vollzogenen Oberflächenbehandlung kann, wie dargelegt, eine Weiterbehandlung erfolgen, wobei es möglich ist, die Rohprodukte tiefgefroren zwischenzulagern oder eine endgültige Wärme- und/oder Hochdruckbehandlung unmittelbar anschließend auszuführen. Im Gegensatz zum Bekannten wird der ansonsten unvermeidliche Verlust von Eiweiß, Fett, Geschmacksstoffen und so weiter verringert und die Produktqualität erhöht. Gleichzeitig ist eine Reduktion der Durchlaufzeiten bei der kontinuierlichen Produktion erreichbar, so daß auch aus technologischer Sicht eine Kostensenkung gegeben ist. Die Gefahr der Rekontamination durch die erforderliche Verpackungsmanipulation nach der Pasteurisierung wird bei dem vorgestellten Verfahren ausgeschaltet. Durch den Einsatz der erwähnten formgebenden Sonotroden ist jede denkbare Produktgestaltung bzw. Produktform erreichbar. In dem Falle, wenn dem Brät für rohe Bratwürste z.B. eine Ring- oder Schneckenform gegeben wird, bleibt diese Form erhalten und die Einzellagen des Bräts haften nicht aneinander.
Durch die Oberflächenbehandlung von Rohwurstbrät kann der ansonsten notwendige formstabilisierende Darm entfallen, so daß sich die Verarbeitbarkeit verbessert, und (aber) auch eine nachträgliche Reifung möglich ist.

Die Erfindung soll anhand eines Ausführungsbeispiels näher erläutert werden.

Wienerbrät wurde bei einer Temperatur von im wesentlichen 8°C aus dem Kutter entnommen und zur weiteren Entgasung durch einen Füllwolf gefördert.
Der Förderstrom des Brätstrangs wurde dann durch gekoppelte, rohrförmige Hohlsonotroden geführt, welche unmittelbar an das Füllrohr des Förderaggregats angeschlossen waren. Über den Förderstrom ließ sich der Druck in der Hohlsonotroden-Rohrströmung einstellen, wobei sich zeigte, daß bei höherem Druck sich der Eintrag bzw. die Einkopplung der Ultraschallenergie auf das Rohprodukt erhöhte.
Durch Beheizung einer der Hohlsonotroden wurde eine verbesserte Homogenität der Eigenhautbildung an der Oberfläche des austretenden Brätstrangs erreicht, wobei der Förderstrom auf ca. 110 1/h heraufgesetzt werden konnte. Die einsetzende Denaturierung reichte etwa 1 mm von der Oberfläche in das Brät hinein.
Im Anschluß wurde der Brätstrom quergeteilt, wobei die Abschnitte auf ein Lochblech überführt wurden. Eine unerwünschte Haftung des geteilten Brätstroms an Kunststoff- oder Metalloberflächen wurde nicht beobachtet. Aneinandergelegte Würste konnten ohne späteres Anhaften in Kunststoffbeuteln unter Vakuum versetzt und auf 78°C erwärmt werden.

Weiterhin wurde erfolgreich nachgewiesen, daß eine Bearbeitung der verfestigten Oberfläche des Bräts durch Besprühen mit Flüssigrauch möglich und eine Bräunung erzielbar ist.

Bei einer Ausgestaltung der Hohlsonotroden wurde diese außenseitig mit einer Heizmatte umgeben, wobei eine Oberflächentemperatur im Bereich von ca. 140°C verzeichnet wurde. Eine gleichmäßige Eigenhautbildung trat bereits bei einer geringen Ultraschallleistung von im wesentlichen 200 W ein. Bei einem Förderstrom von etwa 100 1/h liegt der zur Eigenhautbildung erforderliche spezifische Energieeintrag bei im wesentlichen 7 kJ/kg Ultraschallenergie und 9 kJ/kg Wärmeenergie.
Das Abschalten des Ultraschalls während des Füllprozesses bei gleichzeitiger intensiver Beheizung der Sonotroden führte bei einigen Brätzusammensetzungen nicht wie erwartet zu einem sofortigen Anhaften des Eiweißes an der Sonotrodeninnenfläche.

Aus dieser überraschenden Erkenntnis ist abzuleiten, daß die Ultraschallwirkung primär im Verhindern der bisher unvermeidlichen Anhaftung an der heißen Sonotrodeninnenfläche während des Erhitzungsprozesses zu finden ist. Von dieser Erkenntnis läßt sich ableiten, daß Ultraschall vor allem während der Startphase zur Herabsetzung des Reibungswiderstands an der Innenfläche der erhitzten Sonotroden dient, während im laufenden Prozeß die austretenden Fette und Flüssigkeiten ein Anhaften vermindern bzw. ganz verhindern. Bei auftretenden Produktionsstockungen kann der Volumenstrom durch Zuschalten des Ultraschalls wieder aktiviert werden.

Ein Herabsetzen des Reibungswiderstands durch haftungsminimierende Mikrostrukturen an der Sonotrodeninnenfläche kann den Einsatz von Ultraschall weiter minimieren, und zwar sowohl in zeitlicher als auch energetischer Hinsicht. Es muß jedoch darauf hingewiesen werden, daß aufgrund der Neigung des Bräts, an der beheizten Sonotrodeninnenfläche zusammensetzungsabhängig unterschiedlich anzuhaften, eine Anwendung von Ultraschall unverzichtbar ist.

## Patentansprüche

1. Verfahren zum Verfestigen der Oberfläche von Rohbräten oder Rohwürsten durch Ultraschallbehandlung mit folgenden Schritten innerhalb eines kontinuierlichen Prozesses:
- weitgehendes Entgasen des Rohprodukts;
- unmittelbares Inkontaktbringen des Rohprodukts mit der Oberfläche einer oder mehreren Ultraschallsonotroden, wobei zum Erzielen einer gleichmäßigen Denaturierungsschicht mindestens eine der Ultraschallsonotroden beheizt ist;
- Ausbilden einer dünnen, dichten, formstabilisierenden Koagulations-Eigenhaut auf der Oberfläche des Rohprodukts durch mindestens zeitweises Einwirken von Ultraschallenergie im niedrigen Frequenzbereich, jedoch mit hoher Schwingungsamplitude und Übergabe des Rohprodukts zur weiteren Bearbeitung oder Verpackung.

2. Verfahren nach Anspruch 1,
**dadurch gekennzeichnet, daß**
das Rohprodukt durch rohrförmige Hohlsonotroden unter Druck stehend geführt wird.

3. Verfahren nach Anspruch 1,
**dadurch gekennzeichnet, daß**
formgebende Sonotroden eingesetzt werden.

4. Verfahren nach einem der vorangegangenen Ansprüche,
**dadurch gekennzeichnet, daß**
das Rohprodukt einer gleichgeschalteten Behandlung mit Flüssigrauch oder anderen Geschmacks- oder Dekorstoffen unterzogen wird.

5. Verfahren nach einem der Ansprüche 1 bis 3,
**dadurch gekennzeichnet, daß**
das Rohprodukt einer nachgeschalteten Behandlung mit Flüssigrauch oder anderen Geschmacks- oder Dekorstoffen unterzogen wird.

6. Verfahren nach Anspruch 1,
**dadurch gekennzeichnet, daß**
das Rohprodukt vor der Ultraschallbehandlung zum Entgasen evakuiert wird.

7. Verfahren nach einem der Ansprüche 2 bis 6,
**dadurch gekennzeichnet, daß**
die mit dem Rohprodukt in Kontakt zu bringende Oberfläche der Sonotrode eine haftungsminimierende Mikrostruktur oder eine derartige Strukturbeschichtung aufweist.

## Claims

1. A method for compacting the surface of raw sausage meat materials or raw sausages by means of an ultrasonic treatment, comprising the following steps within a continuous process:
- degassing of the raw product to a substantial degree;
- immediate contacting of the raw product and the surface of one or several ultrasonic sonotrodes, with at least one of the ultrasonic sonotrodes being heated for achieving a homogeneous denaturation layer;
- formation of a thin, dense, shape-stabilising coagulation integral skin on the surface of the raw product by at least temporary application of ultrasonic energy in the low frequency range, but with a high oscillation amplitude, and transfer of the raw product for further processing or packing.

2. The method according to Claim 1,
**characterised in that**
the raw product, while being pressurised, is fed through tubular hollow sonotrodes.

3. The method according to Claim 1,
**characterised in that**
shaping sonotrodes are employed.

4. The method according to one of the previous claims,
**characterised in that**
the raw product is subjected to a parallel treatment with liquid smoke or other flavouring or decorating substances.

5. The method according to one of Claims 1 to 3,
**characterised in that**
the raw product is subjected to a post treatment with liquid smoke or other flavouring or decorating substances.

6. The method according to Claim 1,
**characterised in that**
the raw product is evacuated for degassing prior to the ultrasonic treatment.

7. The method according to one of Claims 1 to,
**characterised in that**
the surface of the sonotrode, which is to be brought in contact with the raw product, comprises an adherence-minimising microstructure or a layer with a corresponding structure.

## Revendications

1. Procédé pour rigidifier la surface de masses de chair à saucisse crue ou de saucisses crues par traitement aux ultrasons, comprenant les étapes suivantes à l'intérieur d'un processus continu :
- dégazage en grande partie du produit cru ;
- mise en contact directe du produit cru avec la surface d'une ou plusieurs sonotrodes à ultrasons, au moins une des sonotrodes à ultrasons étant chauffée pour obtenir une couche de dénaturation régulière ; et
- formation par coagulation d'une propre peau fine, dense et stabilisant la forme, sur la surface du produit cru en faisant agir au moins temporairement l'énergie des ultrasons dans une plage de basses fréquences, toutefois avec une haute amplitude d'oscillation et transmission du produit cru pour le traitement ultérieur ou l'emballage.

2. Procédé selon la revendication 1, **caractérisé en ce que** le produit cru est conduit sous pression à travers des sonotrodes creuses de formes tubulaires.

3. Procédé selon la revendication 1, **caractérisé en ce qu'**on utilise des sonotrodes de mise en forme.

4. Procédé selon l'une des revendications précédentes, **caractérisé en ce que** le produit cru est soumis à un traitement synchronisé avec du liquide donnant le goût de fumé ou d'autres agents de sapidité ou substances décoratives.

5. Procédé selon l'une des revendications 1 à 3, **caractérisé en ce que** le produit cru est soumis à un traitement successif avec du liquide donnant un goût fumé ou d'autres agents de sapidité ou substances décoratives.

6. Procédé selon la revendication 1, **caractérisé en ce que**, avant le traitement aux ultrasons, le produit cru est évacué pour son dégazage.

7. Procédé selon l'une des revendications 2 à 6, **caractérisé en ce que** la surface de la sonotrode entrant en contact avec le produit cru, présente une microstructure qui minimise l'adhérence ou un revêtement de structure analogue.
